(19) **Europäisches Patentamt**

**European Patent Office**

**Office européen des brevets**

(11) **EP 0 789 907 B1**

(12) **FASCICULE DE BREVET EUROPEEN**

(45) Date de publication et mention
de la délivrance du brevet:
**14.05.2003 Bulletin 2003/20**

(51) Int Cl.⁷: **G11B 7/09**

(21) Numéro de dépôt: **96906808.9**

(22) Date de dépôt: **08.03.1996**

(86) Numéro de dépôt international:
**PCT/FR96/00372**

(87) Numéro de publication internationale:
**WO 96/028815 (19.09.1996 Gazette 1996/42)**

(54) **SYSTEME DE REGLAGE DE FOCALISATION OPTIQUE**

FOKUSSIERUNGSSTEUERSYSTEM

OPTICAL FOCUS CONTROL SYSTEM

(84) Etats contractants désignés:
**DE FR GB IT**

(30) Priorité: **14.03.1995 FR 9502922**

(43) Date de publication de la demande:
**20.08.1997 Bulletin 1997/34**

(73) Titulaire: **Thales**
**75008 Paris (FR)**

(72) Inventeur: **LE CARVENNEC, François**
**F-92402 Courbevoie Cédex (FR)**

(56) Documents cités:
**EP-A- 0 089 274**    **EP-A- 0 319 033**
**US-A- 4 023 033**    **US-A- 4 695 158**
**US-A- 4 786 794**

• **PATENT ABSTRACTS OF JAPAN vol. 010, no. 202 (P-477), 15 Juillet 1986 & JP,A,61 042743 (SEIKO INSTR & ELECTRONICS LTD), 1 Mars 1986,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un système de réglage de focalisation et plus particulièrement un système de réglage de focalisation d'un faisceau lumineux d'inscription et/ou de lecture d'informations sur un support mobile. Elle est notamment applicable à un appareil de lecture et/ou d'enregistrement de disque optique ou magnétooptique.

L'invention trouve des applications dans l'enregistrement de données informatiques mais pourraît également dans la technique des disques compacts ainsi que des disques vidéos.

Un support d'enregistrement optique est le plus souvent constitué par une surface réfléchissante, la plupart du temps sous forme d'un disque, présentant des altérations discontinues de petites dimensions disposées selon des pistes. Le type le plus courant actuellement est le disque audio appelé disque compact (ou compact disc) ; dans ce cas les altérations sont des microcuvettes ou, de façon plus générale, des microreliefs de la surface plane réfléchissante. Ces microreliefs ont une largeur d'environ 0,4 micromètre et les axes de deux pistes voisines sont séparés par une distance (le pas) de 1,6 micromètre.

La présence de ces microreliefs est détectée à l'aide d'un appareil comprenant un laser dont le faisceau est focalisé sur la surface réfléchissante, la dimension de ce faisceau étant minimisée pour qu'il n'atteigne qu'un seul microrelief à la fois. Quand le faisceau atteint la surface réfléchissante, la lumière est réfléchie. Quand le faisceau atteint un microrelief il se produit de la diffraction, c'est-à-dire que la lumière est dispersée dans toutes les directions. L'appareil est tel que dans le cas d'une réflexion du faisceau sur la surface lisse des détecteurs reçoivent une énergie maximum et lorsque ce faisceau atteint un microrelief ces détecteurs ne reçoivent qu'une partie de l'énergie lumineuse en raison de la diffraction qui a fait échapper une partie du faisceau du système optique prévu entre le disque et les détecteurs.

Les disques ou autres supports préenregistrés ont habituellement toutes leurs informations sous forme de microrelief. Par contre dans les disques enregistrables, c'est généralement seulement l'information préenregistrée, ou préformat, qui est sous forme de microreliefs, les informations étant enregistrées en formant d'autres altérations : modifications du coefficient de réflexion ou pour des disques magnétooptiques, modification de l'aimantation qui à la lecture se traduit par une rotation de la polarisation.

Les informations préenregistrées ou préformat définissent une configuration de piste.

Le fonctionnement de l'appareil de lecture et/ou d'enregistrement n'est correct que si le faisceau laser de lecture (ou d'enregistrement) est focalisé sur la surface réfléchissante du disque.

Pour permettre la focalisation en permanence du faisceau laser sur la surface réfléchissante il faut prévoir un asservissement avec un moyen de mesure de l'écart à la focalisation en grandeur et en signe.

Les systèmes connus peuvent réaliser ce réglage de focalisation avec des dispositions possédant une grande dynamique de détection qui fournissent une grande plage de réglage tels que les détecteurs de type "continu". Par exemple, on trouvera un exemple d'un détecteur dans le Brevet français n° 74 01283 dans lequel on introduit, dans le faisceau de lecture de focalisation, un effet d'astigmatisme à l'aide d'une lentille cylindrique. Quatre photodétecteurs sont placés en croix. Lorsque la focalisation est normalement réglée, les quatre photodétecteurs reçoivent la même quantité de lumière. Lorsque la focalisation se déplace dans un sens, deux photodétecteurs diamétralement opposés reçoivent plus de lumière que les deux autres et inversement, lorsque la focalisation se déplace en sens inverse. Ce type de détecteur présente l'inconvénient d'avoir sa position d'erreur de réglage nulle qui peut varier au cours du temps.

Le réglage de focalisation peut se faire également avec des détecteurs du type "échantillonneur" tel que décrit dans le Brevet français n° 2 523 349. Selon ce système, le support d'informations possède au moins une première marque située d'un côté de l'axe d'une piste d'informations et une deuxième marque située de l'autre côté de ce même axe. Deux photodétecteurs sont disposés de part et d'autre d'un plan contenant l'axe de la piste et reçoit la lumière transmise par le support lors du balayage de la première marque puis de la deuxième marque. Les écarts de quantités de lumière détectées permettent de déterminer toute erreur de focalisation en signe et en amplitude. L'inconvénient d'un tel système est qu'il présente une dynamique faible.

Des solutions ont été proposées selon lesquelles on utilise deux détecteurs de dynamique différente pour constituer un signal d'erreur de focalisation satisfaisant quant à la dynamique et à la précision. C'est en particulier le cas dans le brevet US-A-4 695 158 qui est utilisé pour délimiter la revendication 1 et qui décrit un système combinant les signaux de deux capteurs à photodétecteurs quatre quadrants fonctionnant sur le même principe de l'utilisation de l'astigmatisme. S'il est vrai que l'on obtient ainsi une plage de fonctionnement élargie, il reste que la précision et la stabilité de réglage ne sont pas meilleures que celles d'un capteur classique utilisant la méthode astigmatique.

Un support optique ou magnétooptique possède une surface principale sur laquelle est inscrite des informations. Ces informations peuvent être des marques optiques (variations d'indices, reliefs, variations de pouvoir réflecteur) ou des marques magnétiques. Le réglage de la focalisation du faisceau de lecture ou d'inscription peut se faire sur cette surface. Cependant, le réglage obtenu est peu précis. Le support peut comporter également des informations lisibles optiquement lecture optique ou magnétooptique. Dans ce cas, le réglage de focalisation peut se faire sur ces informations. Dans ce cas la plage de réglage est plus étroite mais le réglage précis est plus stable.

L'invention prévoit de combiner ces deux types de réglage pour mettre à profit de manière indépendante ces deux méthodes.

L'invention concerne donc un système de réglage de focalisation selon la revendication.

D'autres aspects de l'invention sont définis dans les revendications 2 à 9.

Les différents objets et caractéristiques de l'invention apparaîtront plus clairement dans la description qui va suivre et dans les figures annexées qui représentent :

-   les figures 1a à 1c, un système connu dans la technique ;
-   les figures 2a et 2b, un système de focalisation selon l'invention ;
-   les figures 3a et 3b, des courbes de fonctionnement du système selon l'invention ;
-   les figures 4a et 4b, des courbes détaillant les signaux de fonctionnement selon l'invention.

En se reportant aux figures la et 1b, on va tout d'abord décrire à titre d'exemple une application de l'invention à la focalisation d'un faisceau lumineux sur un support d'informations 5 tel qu'un disque optique.

Selon la figure la, ce disque peut tourner dans un plan XY autour d'un axe parallèle au troisième axe d'un trièdre de référence XYZ. La face inférieure de ce disque est ici supposée lisse ; la face supérieure qui lui est parallèle est également lisse, mais comporte une piste prégravée 7 sous forme d'une piste lisse dont la largeur sensiblement constante est de l'ordre ou inférieure au micromètre.

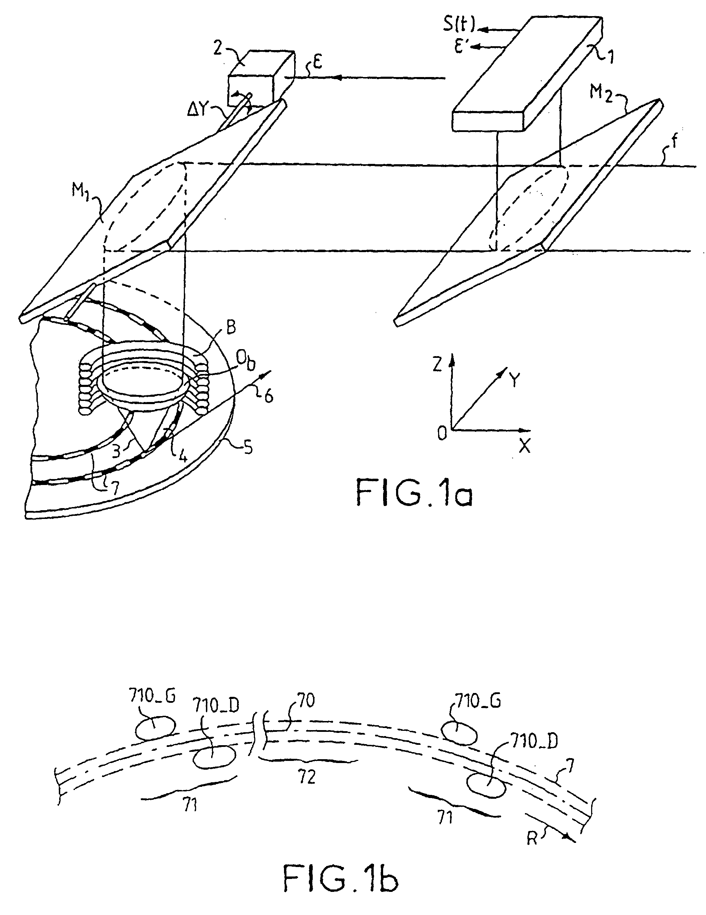

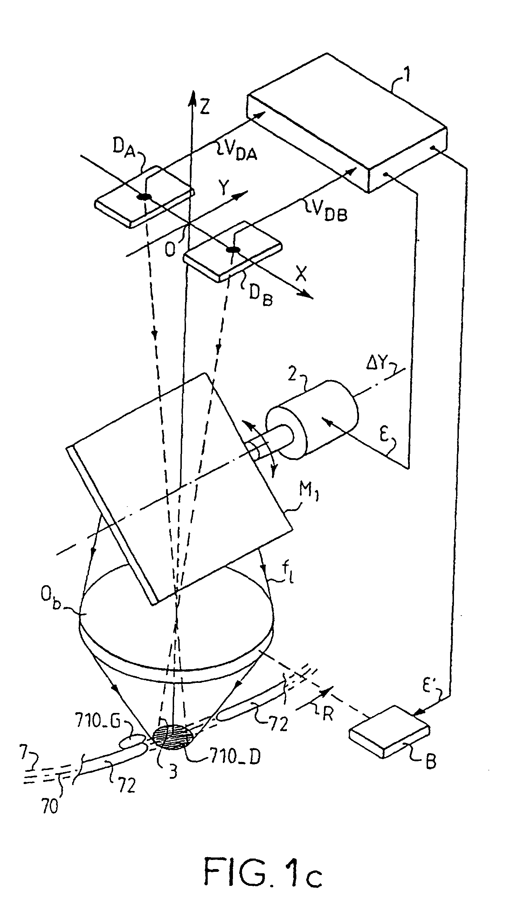

On peut utiliser un tel disque, soit pour inscrire des informations en un point déterminé d'une des pistes lisses inscrites au préalable, soit pour lire des informations inscrites en un point quelconque de cette piste. Le disque, par exemple d'un diamètre d'environ 30 cm, est animé d'un mouvement de rotation communiqué par un moteur d'entraînement solidaire du châssis du système optique d'enregistrement/lecture. Dans cet exemple de réalisation, le dispositif d'accès à une piste prédéterminée du disque comprend une partie fixe comprenant une source d'énergie lumineuse (non représentée sur la figure 1) et une partie mobile constituée par la tête d'enregistrement/lecture. Comme il est connu, cette dernière comprend un objectif du type microscope $O_b$, solidaire d'une bobine électromagnétique B se déplaçant dans le champ magnétique d'un aimant permanent (non représenté) assurant l'asservissement vertical ou la focalisation et un miroir galvanométrique $M_1$ assurant l'asservissement radial. La source lumineuse est couramment une source laser à semiconducteurs dont le faisceau laser doit être agrandi de façon à recouvrir la pupille d'entrée de l'objectif, ce quelle que soit la position de l'objectif le long de l'axe optique.

L'objectif $O_b$ focalise le faisceau au point 3 sur le disque support d'information 5. Ce disque est animé d'un mouvement de rotation symbolisé par la flèche 6. L'objectif $O_b$ et le miroir $M_1$ sont solidaires d'un équipage mobile constituant la tête d'enregistrement/lecture. L'avance de cet ensemble mobile peut être obtenue par tout moyen connu.

Le disque 5 possède une prégravure de la piste qui peut se présenter sous différents aspects. Il peut s'agir par exemple d'une prégravure en creux, selon un ensemble d'éléments de pistes agencés selon des cercles concentriques ou organisés selon une spirale. La largeur des éléments de piste est choisie légèrement inférieure au diamètre de la tache lumineuse et ces éléments sont séparés par des plages interpistes dont la largeur est légèrement supérieure à la largeur de la piste. La surface supérieure du support reçoit une couche mince appropriée à l'inscription par un procédé thermo-optique. Cette disposition d'éléments permet d'explorer la piste avant inscription.

Pour détecter les faisceaux de lecture réfléchis par le disque, on interpose, par exemple, une lame semi-transparente $M_2$ sur le trajet du faisceau $f_1$. Le faisceau réfléchi est alors envoyé vers des moyens photodétecteurs 1 et de traitement de signal qui peuvent délivrer d'une part un signal d'erreur ε qui permet de commander le moteur 2 permettant de piloter la position du miroir $M_1$, en réalisant ainsi un asservissement radial, d'autre part un signal d'erreur ε', qui permet de commander la bobine B solidaire de l'objectif OB en réalisant ainsi un asservissement de focalisation. Toutes ces techniques sont bien connues de l'homme de métier et sortent du cadre de l'invention.

L'utilisation de prégravures discrètes permet de s'affranchir des difficultés liées au suivi radial. La figure 1b représente un exemple de prégravure.

Elle comporte au moins une marque 710G située à gauche de l'axe 70 de la piste et une marque 710D située à droite de l'axe de la piste. La zone 72 située entre deux groupes de marques 710G-710D sert à enregistrer les informations de données.

Le détecteur 1 de la figure 1a comporte deux photodétecteurs $D_A$, $D_B$ situés de part et d'autre d'un plan contenant l'axe de la piste (voir figure 1c).

En ce qui concerne la focalisation, la piste 7 du support à suivre est comprise dans un plan compris entre l'objectif et son foyer, les signaux détectés par la photodiode $D_A$ dus aux tronçons décalés à droite (710-D) sont plus importants que ceux détectés par la photodiode $D_B$. L'inverse se produit lors du passage d'un tronçon décalé à gauche (710-G).

Si la piste 7 à suivre est comprise dans un plan plus éloigné de l'objectif que le foyer, on observe des effets en tous points complémentaires à ce qui vient d'être décrit. Pour déterminer le signal d'erreur de focalisation ε', on intègre ou échantillonne les signaux détectés $V_A$ et $V_B$ respectivement $V_{A1}$ et $V_{B1}$ ; pendant le passage du premier tronçon 7.

$V_{A2}$ et $V_{B2}$ pendant les passages du deuxième tronçon :

et on effectue l'opération algébrique :

$$(V_{A1} + V_{B2}) - (V_{A2} + V_{B1})$$

le résultat est proportionnel au signal d'erreur de focalisation, en signe et en amplitude.

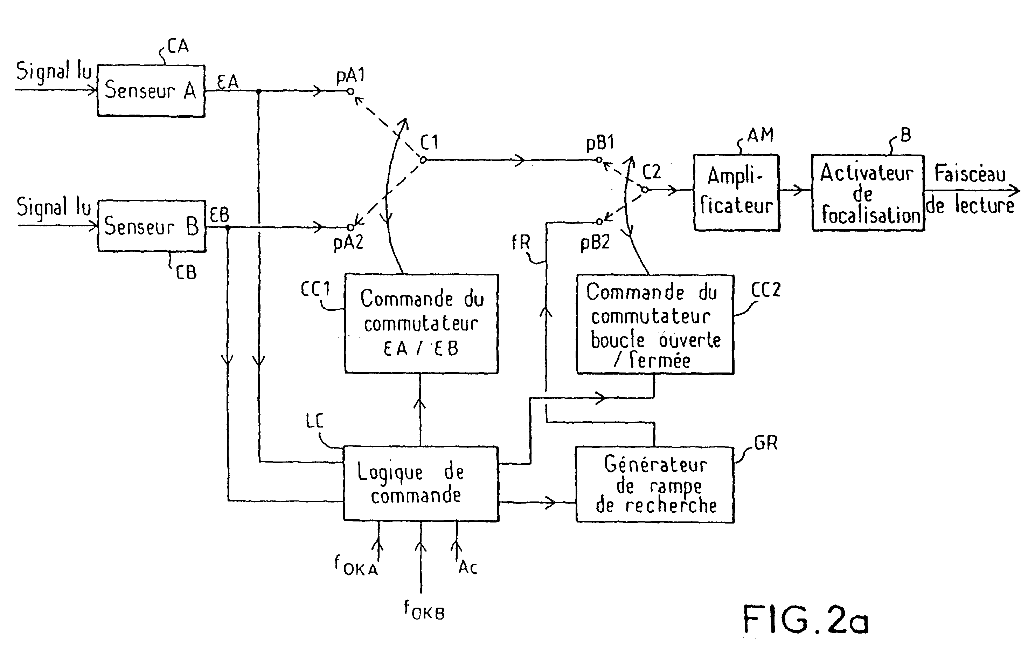

En se reportant à la figure 2a, on va décrire un exemple de réalisation du système de réglage de focalisation selon l'invention.

Ce système comporte un dispositif de commande de réglage de focalisation agissant sur la bobine B de commande de focalisation de l'objectif Ob (de la figure 1a) et permettant de déplacer son point de focalisation selon une ligne perpendiculaire au plan du support d'informations 5.

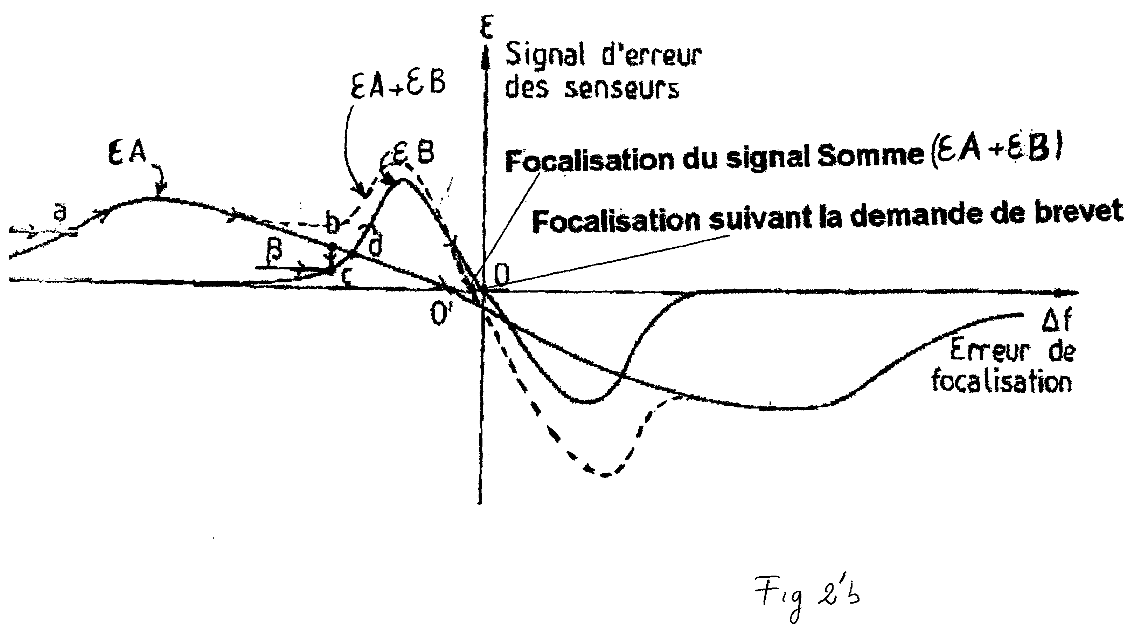

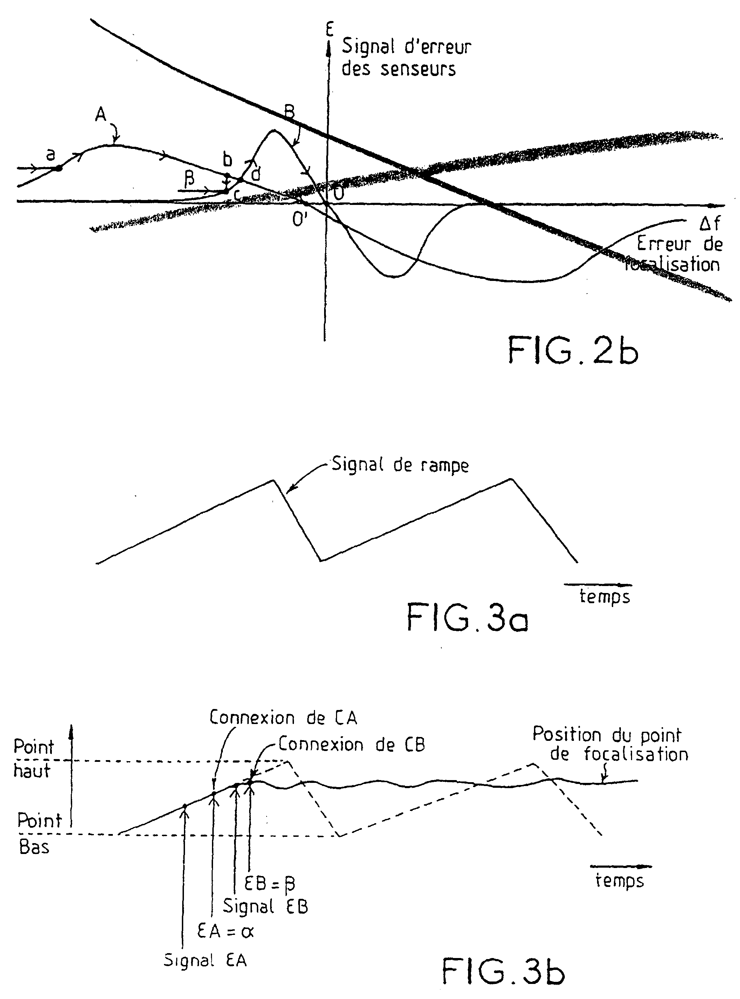

Des détecteurs CA et CB reçoivent la lumière réfléchie par le support 5. Le détecteur CA présente une grande dynamique de détection mais une stabilité douteuse tel que cela est illustré par la courbe A de la figure 2b. Il doit être considéré comme étant peu précis et déréglable. Le détecteur CB présente au contraire une faible dynamique de détection une bonne précision et une bonne stabilité comme illustré par la courbe B de la figure 2b.

Un système de commutation comportant au moins deux contacts C1, C2 permet de connecter le dispositif de commande de focalisation B soit à un générateur de rampe de recherche RF, soit au détecteur CA, soit au détecteur CB.

Une logique de commande LC permet de gérer le fonctionnement du système et de commander le générateur de rampe GR et des circuits de commande CC1, CC2 des contacts C1, C2.

Le fonctionnement du système est le suivant.

Une demande de processus de focalisation représentée par le signal AC est fournie à la logique de commande LC par des moyens non représentés.

La logique de commande assure alors à l'aide des circuits CC1 et CC2 la commutation des contacts C1 et C2 respectivement en position pA1 et pB2.

Un signal de rampe tel que représenté en figure 3a est généré et est appliqué au dispositif de réglage de focalisation B afin d'assurer le déplacement du point de focalisation du faisceau perpendiculairement à la surface porteuse de l'information (support 5). Le mouvement de ce point de focalisation du faisceau est tel que la surface du support 5 puisse entrer dans la zone du capteur du détecteur CA. Un signal d'erreur de position εA est alors généré par ce détecteur CA.

Lorsque le signal εA atteint une valeur prédéterminée α, la logique de commande LC assure le passage du commutateur C2 en position pB1 (boucle fermée). La boucle est alors alimentée par le signal d'erreur εA.

Le servomécanisme peut alors "s'accrocher" et le point de fonctionnement de la boucle se déplace (voir figure 2b) sur la courbe A du point a vers le point 0', point d'équilibre stable de la boucle (correspondant à un signal εA = 0).

Se faisant le point de focalisation du faisceau entre dans la zone de capture du détecteur CB et un signal εB est généré. Lorsque ce signal atteint une valeur prédéterminée β la logique de commande assuré la commutation du commutateur C1 sur la position pA2. La boucle est alors alimentée par le signal d'erreur εB. Le point de fonctionnement passe alors du point b de la courbe A au point c de la courbe B.

Il est à noter que la commutation du contact C1 en position pA1 peut être réalisée après la mise en fonctionnement du système. Elle doit être effective au moment du passage du contact C2 en position pb1.

Sur la figure 2B, le point de fonctionnement se déplace maintenant du point C vers le point d puis vers le point 0, position stable de la boucle (connectée au détecteur B) (εB = 0) correspondant à une bonne focalisation (Δf = 0), plus précise que celle correspondant au point O').

La figure 3b un exemple de déplacement du point de focalisation lors du fonctionnement précédemment décrit.

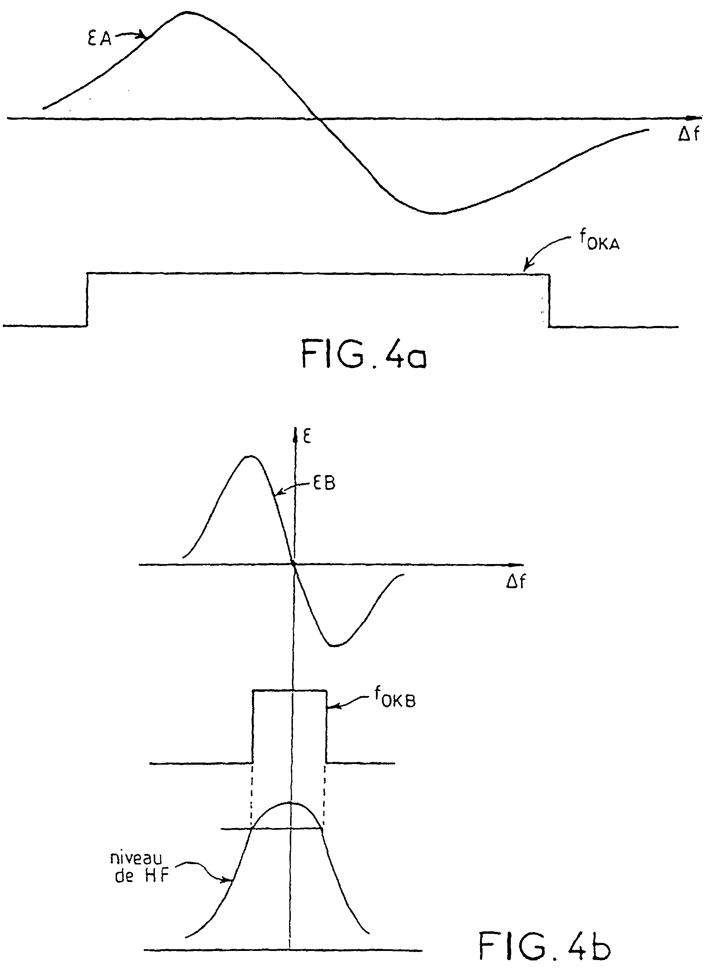

Le fonctionnement du dispositif lors des séquences ci-dessus peut être contrôlé à l'aide de signaux fOKA, fOKB (focalisation OK) correspondant à des valeurs significatives c'est-à-dire supérieure à des valeurs de seuil. Ces signaux permettent en particulier de lever l'ambiguïté relativement à la signification de signaux εA, εB. Des valeurs voisines de 0 peuvent en effet être obtenues en différentes zones des courbes A et B. Les signaux lus prennent alors des valeurs significatives différentes dans ces zones (voir figures 4a et 4b).

Ces signaux peuvent être utilisés pour :

- déterminer les bons points a, b (fOKA, fOKB) ;
- contrôler l'accrochage en a, b (fOKA, fOKB) ;
- contrôler la perte de focalisation (fOKA, fOKB).

Plus précisément, lors d'une commande de focalisation si le signal fOkA n'est pas fourni (fOkA = 0), le signal fOkB n'est pas fourni (fOkB = 0), le système commande le fonctionnement du générateur de rampe GR jusqu'à ce que le signal d'erreur εA devienne supérieur à un niveau de seuil a et que fOkA = 1. Le réglage se fait alors avec le détecteur CA jusqu'à ce que le signal d'erreur εB dépasse le niveau b (voir figure 2b) et que fOkB = 1, la focalisation étant alors réglée par le détecteur CB.

Dans ce qui précède on a considéré que lors de la commande de recherche de focalisation, le système était défocalisé. On a donc eu recours aux différentes étapes du procédé : signal de rampe, détecteur CA, puis détecteur CB.

Cependant, si lors de la commande de recherche de focalisation l'erreur de focalisation est faible, un signal fOKA ou fOKB par exemple est fourni et le système fonctionne à partir du point de fonctionnement où il se trouve sur la figure 2b.

Par exemple, les signaux fOkA et fOkB peuvent être fournis (fOkA = 1, fOkB = 1), le réglage de la focalisation passe alors directement sous le contrôle du détecteur CB.

Selon un autre mode de fonctionnement possible, on peut avoir fOkA = 1 et fOkB = 0. Dans ce cas, on peut choisir de mettre le réglage de focalisation sous le contrôle du détecteur CA jusqu'à ce que le signal εB passe par le seuil b et que fOkB = 1. Si au bout d'une certaine temporisation, cela ne se produit pas le réglage de focalisation passe sous le contrôle du détecteur CB.

Il est à noter qu'une version simplifiée du système pourrait consister à n'utiliser uniquement que les signaux fOkA et fOkB pour le réglage de la focalisation. Dans ce cas, lors d'une demande de recherche de focalisation, fOkA = 0 et fOkB = 0, le générateur de rampe fournit le signal de rampe jusqu'à ce que fOkA = 1, ensuite le réglage de focalisation est placé sous le contrôle de fOkA jusqu'à ce que fOkB = 1.

Selon une variation de réalisation, le détecteur CB peut être un système de détection du signal d'erreur par wobulation, c'est-à-dire un système induisant une oscillation du réglage de la focalisation avec détection synchrone pour générer un signal d'erreur relativement précis.

Selon un exemple de réalisation selon l'invention, le détecteur CA a une grande dynamique de détection et comporte quatre cellules de photodétection. Comme cela a été décrit précédemment, son fonctionnement tire profit de l'astigmatisme du faisceau de lecture.

Le détecteur CB est un détecteur du type échantillonné et possède deux cellules de photodétection.

Il est à noter que les deux cellules de photodétection du détecteur CB peuvent être celles du détecteur CA.

Dans la description qui précède, on a principalement décrit la lecture d'un support optique d'informations dans lequel les informations sont des marques optiques (reliefs, variations d'indices, variations d'intensité par réflexion notamment). Cependant, le suport pourrait être un support magnétique portant des informations caractérisées par des orientations d'aimantation. La lecture serait alors une lecture magnétooptique utilisant l'effet Kerr ou l'effet Faraday (rotation de la polarisation de la lumière).

## Revendications

**1.** Système de réglage de focalisation d'un dispositif optique comportant une optique de focalisation (Ob) d'un faisceau lumineux (f) stigmatique sur un plan de support d'informations (5), comportant une piste d'information (7) sous forme de marques optiques ou magnétiques; ladite piste comporte un axe (70) ;

- un dispositif de commande (B) de déplacement du point de focalisation par rapport au plan du support (5) ;
- un premier détecteur (CA) possédant une dynamique de détection de focalisation déterminée, foumissant un premier signal d'erreur de focalisation (εA);
- un deuxième détecteur (CB) possédant une dynamique de détection de focalisation plus faible que celle du premier détecteur, foumissant un deuxième signal d'erreur de focalisation (εB) ;
- une logique de commande (LC, CC2) permettant de placer le fonctionnement du dispositif de commande (B) sous le contrôle du premier et du deuxième signal d'erreur de focalisation

    **caractérisé en ce que**

- le deuxième signal d'erreur de focalisation (εB) est fourni à partir des informations inscrites sous forme de marques optiques ou magnétiques
  
  et
- la logique de commande place le fonctionnement du dispositif de commande sous le contrôle du premier signal d'erreur de focalisation (εA) lorsque celui-ci dépasse une valeur déterminée (α) jusqu'à ce que le deuxième signal d'erreur de focalisation dépasse une autre valeur déterminée (β) et la logique de commande commute le fonctionnement de dispositif de commande sous le contrôle du second signal d'erreur de focalisation.

**2.** Système selon la revendication 1, dans lequel le support (5) comporte dans la zone d'éclairement du faisceau deux marques disposées de part et d'autre de l'axe de déplacement relatif du faisceau et du support (5), **caractérisé en ce que** :

- le deuxième détecteur (CB) comporte deux cellules de photodétection ($D_A$, $D_B$) disposées de part et d'autre de l'image de l'axe de la piste sur le plan de ces cellules ;
- un circuit permet d'élaborer ledit deuxième signal d'erreur de focalisation à partir des quantités de lumière détectées par les deux cellules de photodétection lors de la lecture de la première marque puis de la deuxième marque.

**3.** Système selon l'une des revendications 1 ou 2, **ca-**

**ractérisé en ce que** la logique de commande, lors d'une initialisation d'une commande de focalisation, fournit un signal de variation continue (fR) au dispositif de commande (B) jusqu'à ce que le premier signal d'erreur de focalisation ($\varepsilon$A) soit supérieur à sa valeur déterminée ($\alpha$).

4. Système selon la revendication 3, **caractérisé en ce qu'**il comporte au moins des moyens pour mesurer l'intensité de lumière réfléchie par le support et fournissant un premier signal de focalisation (fOKA) lorsque cette intensité est supérieure à un niveau déterminé et des moyens pour mesurer l'intensité du signal de lecture de l'information et fournissant un second signal de focalisation (fOKB) lorsque cette intensité est supérieure à un seuil, la logique de commande fournissant au dispositif de commande (B):

   - ledit signal de variation continue (fR) jusqu'à ce que le premier détecteur (CA) fournisse sur une sortie ledit premier signal d'erreur de focalisation ($\varepsilon$A) et que le premier signal de focalisation (fOKA) soit fourni ;
   - ledit premier signal d'erreur de focalisation ($\varepsilon$A) lorsque le premier détecteur (CA) fournit ce premier signal d'erreur de focalisation et que le premier signal de focalisation (fOKA) est fourni, jusqu'à ce que le deuxième détecteur (CB) fournisse sur une sortie ledit deuxième signal d'erreur de focalisation ($\varepsilon$B) et que le second signal de focalisation (fOKB) soit fourni ;
   - ledit deuxième signal d'erreur de focalisation ($\varepsilon$B) lorsque le deuxième détecteur (CB) fournit ce deuxième signal d'erreur de focalisation et que le second signal de focalisation (fOKB) est fourni.

5. Système selon la revendication 4, **caractérisé en ce que** lorsque les signaux de focalisation (fOKA et fOKB) sont fournis, la logique de commande place le dispositif de commande (B) directement sous le contrôle du deuxième signal d'erreur de focalisation ($\varepsilon$B).

6. Système selon l'une des revendications 3 à 5, **caractérisé en ce qu'**il comporte un système de commutation commandé par la logique de commande et comportant :

   - un premier commutateur (C1) permettant de connecter vers le dispositif de commande (B), soit la sortie du premier détecteur (CA), soit la sortie du deuxième détecteur (CB) ;
   - un deuxième commutateur (C2) permettant de connecter au dispositif de commande (B) soit un circuit fournissant le signal de variation continue (fR), soit le premier commutateur (C1).

7. Système selon l'une des revendications 4 ou 5, **caractérisé en ce qu'**il comporte un système de commutation commandé par la logique de commande et comportant ;

   - un premier commutateur (C1) permettant de connecter vers le dispositif de commande (B), soit le premier signal de focalisation (fOKA), soit le second signal de focalisation (fOKB);
   - un deuxième commutateur (C2) permettant de connecter au dispositif de commande (B) soit un circuit fournissant le signal de variation continue (fR) soit le premier commutateur (C1).

8. Système selon l'une des revendications 1 à 7, **caractérisé en ce que** le premier détecteur (CA) comporte :

   - quatre cellules de photodétection ;
   - un dispositif d'astigmatisme placé sur le trajet du faisceau de lecture transmis par le support (5) ;
   - un circuit d'élaboration du premier signal d'erreur de focalisation ($\varepsilon$A) à partir des quantités de lumière détectées par les quatre photodétecteurs.

9. Système selon la revendication 8, **caractérisé en ce que** les deux cellules de photodétection du deuxième détecteur (CB) sont constituées par des cellules du premier détecteur (CA).


**Patentansprüche**

1. System zur Einstellung der Fokussierung einer optischen Vorrichtung, die eine Optik (Ob) umfaßt, die ein stigmatisches Lichtstrahlenbündel (f) auf eine Ebene eines Informationsträgers (5) fokussiert, der eine Informationsspur (7) in Form optischer oder magnetischer Markierungen aufweist, wobei die Spur eine Achse (70) besitzt;

   - eine Steuervorrichtung (B) für die Verlagerung des Brennpunkts in bezug auf die Ebene des Trägers (5);

   - einen ersten Detektor (CA), der eine bestimmte Fokussierungserfassungsdynamik besitzt und ein erstes Fokussierungsfehlersignal ($\varepsilon$A) liefert;

   - einen zweiten Detektor (CB), der eine geringere Fokussierungserfassungsdynamik als der erste Detektor besitzt und ein zweites Fokussierungsfehlersignal ($\varepsilon$B) liefert;

   - eine Steuerlogik (LC, CC2), die ermöglicht, den Betrieb der Steuervorrichtung (B) unter der Steuerung des ersten und des zweiten Fokussierungsfehlersignals auszuführen,

**dadurch gekennzeichnet, daß**

- das zweite Fokussierungsfehlersignal ($\varepsilon$B) anhand von Informationen geliefert wird, die in Form optischer oder magnetischer Markierungen geschrieben sind, und

- die Steuerlogik den Betrieb der Steuervorrichtung der Steuerung durch das erste Fokussierungsfehlersignal ($\varepsilon$A) unterwirft, wenn dieses einen bestimmten Wert ($\alpha$) übersteigt, bis das zweite Fokussierungsfehlersignal einen weiteren bestimmten Wert ($\beta$) übersteigt, und die Steuerlogik den Betrieb der Steuervorrichtung zu der Steuerung durch das zweite Fokussierungsfehlersignal umschaltet.

2. System nach Anspruch 1, bei dem der Träger (5) in der Zone der Beleuchtung mit dem Strahlenbündel zwei Markierungen aufweist, die beiderseits der Achse der relativen Verlagerung des Strahlenbündels und des Trägers (5) angeordnet sind, **dadurch gekennzeichnet, daß**:

- der zweite Detektor (CB) zwei Photodetektorzellen (D$_A$, D$_B$) umfaßt, die beiderseits der Abbildung der Achse der Spur auf die Ebene dieser Zellen angeordnet sind;

- eine Schaltung ermöglicht, das zweite Fokussierungsfehlersignal anhand der Lichtmengen zu bilden, die von den beiden Photodetektorzellen erfaßt werden, wenn die erste Markierung und dann die zweite Markierung gelesen werden.

3. System nach einem der Ansprüche 1 oder 2, **dadurch gekennzeichnet, daß** die Steuerlogik bei der Initialisierung eines Fokussierungsbefehls ein kontinuierlich veränderliches Signal (fR) zur Steuervorrichtung (B) liefert, bis das erste Fokussierungsfehlersignal ($\varepsilon$A) größer als sein bestimmter Wert ($\alpha$) ist.

4. System nach Anspruch 3, **dadurch gekennzeichnet, daß** es wenigstens Mittel zum Messen der Intensität des vom Träger reflektierten Lichts, die ein erstes Fokussierungssignal (fOKA) liefern, wenn diese Intensität größer als ein bestimmter Pegel ist, und Mittel zum Messen der Intensität des Informationslesensignals, die ein zweites Fokussierungssignal (fOKB) liefern, wenn diese Intensität größer als ein Schwellenwert ist, umfaßt, wobei die Steuerlogik an die Steuervorrichtung (B) liefert:

- das kontinuierlich veränderliche Signal (fR), bis der erste Detektor (CA) an einem Ausgang das erste Fokussierungsfehlersignal ($\varepsilon$A) ausgibt und das erste Fokussierungssignal (fOKA) geliefert wird;

- das erste Fokussierungsfehlersignal ($\varepsilon$A), wenn der erste Detektor (CA) dieses erste Fokussierungsfehlersignal liefert und das erste Fokussierungssignal (fOKA) geliefert wird, bis der zweite Detektor (CB) an einem Ausgang das zweite Fokussierungsfehlersignal ($\varepsilon$B) liefert und das zweite Fokussierungssignal (fOKB) geliefert wird;

- das zweite Fokussierungsfehlersignal ($\varepsilon$B), wenn der zweite Detektor (CB) dieses zweite Fokussierungsfehlersignal liefert und das zweite Fokussierungssignal (fOKB) geliefert wird.

5. System nach Anspruch 4, **dadurch gekennzeichnet, daß** die Steuerlogik dann, wenn die Fokussierungssignale (fOKA und fOKB) geliefert werden, die Steuervorrichtungen (B) direkt der Steuerung durch das zweite Fokussierungsfehlersignal ($\varepsilon$B) unterwirft.

6. System nach einem der Ansprüche 3 bis 5, **dadurch gekennzeichnet, daß** es ein Umschaltsystem umfaßt, das von der Steuerlogik gesteuert wird und umfaßt:

- einen ersten Umschalter (C1), der ermöglicht, entweder den Ausgang des ersten Detektors (CA) oder den Ausgang des zweiten Detektors (CB) an die Steuervorrichtung (B) anzuschließen;

- einen zweiten Umschalter (C2), der ermöglicht, entweder eine das kontinuierlich veränderliche Signal (fR) liefernde Schaltung oder den ersten Umschalter (C1) an die Steuervorrichtung (B) anzuschließen.

7. System nach einem der Ansprüche 4 oder 5, **dadurch gekennzeichnet, daß** es ein Umschaltsystem umfaßt, das von der Steuerlogik gesteuert wird und umfaßt:

- einen ersten Umschalter (C1) der ermöglicht, entweder das erste Fokussierungssignal (fOKA) oder das zweite Fokussierungssignal (fOKB) in die Steuervorrichtung (B) einzugeben;
- einen zweiten Umschalter (C2), der ermöglicht, entweder eine das kontinuierlich veränderliche Signal (fR) liefernde Schaltung oder den ersten Umschalter (C1) an die Steuervorrichtung (B) anzuschließen.

**8.** System nach einem der Ansprüche 1 bis 7, **dadurch gekennzeichnet, daß** der erste Detektor (CA) umfaßt:

- vier Photodetektorzellen;

- eine Astigmatismus-Vorrichtung, die in der Bahn des vom Träger (5) übertragenen Lesestrahlenbündels angeordnet ist;

- eine Schaltung für die Bildung des ersten Fokussierungsfehlersignals (εA) anhand der von den vier Photodetektoren erfaßten Lichtmengen.

**9.** System nach Anspruch 8, **dadurch gekennzeichnet, daß** die zwei Photodetektorzellen des zweiten Detektors (CB) durch die Zellen des ersten Detektors (CA) gebildet sind.

**Claims**

**1.** System for adjusting the focusing of an optical device, comprising an optic (Ob) for focusing a stigmatic light beam (f) onto a plane of an information medium (5), comprising an information track (7) in the form of optical or magnetic marks, the said track having an axis (70);

- a device (B) for controlling the displacement of the focusing point with respect to the plane of the medium (5);
- a first detector (CA) having a defined dynamic focusing detection range and delivering a first focusing error signal (εA);
- a second detector (CB) having a dynamic focusing detection range smaller than that of the first detector, delivering a second focusing error signal (εB);
- a logic control unit (LC, CC2) making it possible to place the operation of the control device (B) under the control of the first and second focusing error signals;

**characterized in that**:

- the second focusing error signal (εB) is delivered on the basis of the information written in the form of optical or magnetic marks; and
- the control logic unit places the operation of the control device under the control of first focusing error signal (εA) when the latter exceeds a defined value (α), until the second focusing error signal exceeds another defined value (β), and the logic control unit switches the operation of the control device under the control of the second focusing error signal.

**2.** System according to Claim 1, in which the medium (5) has, in the beam illumination region, two marks placed on either side of the axis of relative displacement of the beam and the medium (5), **characterized in that**:

- the second detector (CB) comprises two photo detection cells ($D_A$, $D_B$) placed on each side of the image of the axis of the track on the plane of these cells; and
- a circuit for generating the said second focusing error signal on the basis of the quantities of light detected by the two photo detection cells on reading the first mark and then the second mark.

**3.** System according to either of Claims 1 and 2, **characterized in that** the logic control unit, upon initializing a focusing command, delivers a continuously varying signal (fR) to the control device (B) until the first focusing error signal (εA) is above its defined value (α).

**4.** System according to Claim 3, **characterized in that** it includes at least means for measuring the intensity of light reflected by the medium and delivering a first focusing signal (fOKA) when this intensity is greater than a defined level and means for measuring the intensity of the information read signal and delivering a second focusing signal (fOKB) when this intensity is above a threshold, the control logic unit delivering, to the control device (B):

- the said continuously varying signal (fR) until the first detector (CA) delivers, onto one output the said first focusing error signal (εA) and until the first focusing signal (fOKA) is delivered;
- the said first focusing error signal (εA) when the first detector (CA) delivers this first focusing error signal and when the first focusing signal (fOKA) is delivered, until the second detector (CB) delivers onto an output the said second focusing error signal (εB) and until the second focusing signal (fOKB) is delivered; and
- the said second focusing error signal (εB) when the second detector (CB) delivers this second focusing error signal and when the second focusing signal (fOKB) is delivered.

**5.** System according to Claim 4, **characterized in that**, when the focusing signals (fOKA and fOKB) are delivered, the logic control unit places the control device (B) directly under the control of the second focusing error signal (εB).

6. System according to one of Claims 3 to 5, **characterized in that** it includes a switching system controlled by the control logic unit and comprising:

   - a first switch (C1) for connecting the control device (B) either to the output of the first detector (CA) or to the output of the second detector (CB); and
   - a second switch (C2) for connecting the control device (B) either to a circuit delivering the continuously varying signal (fR) or to the first switch (C1).

7. System according to either of Claims 4 and 5, **characterized in that** it includes a switching system controlled by the control logic unit and comprising:

   - a first switch (C1) for connecting the control device (B) either to the first focusing signal (fOKA) or to the second focusing signal (fOKB); and
   - a second switch (C2) for connecting the control device (B) either to a circuit delivering the continuously varying signal (fR) or to the first switch (C1).

8. System according to one of Claims 1 to 7, **characterized in that** the first detector (CA) comprises,

   - four photo detection cells;
   - an astigmatism device placed in the path of the read beam transmitted by the medium (5); and
   - a circuit for generating the first focusing error signal ($\varepsilon$A) on the basis of the quantities of light detected by the four photo detectors.

9. System according to Claim 8, **characterized in that** the two photo detection cells of the second detector (CB) consist of cells of the first detector (CA).

FIG.1a

FIG.1b

FIG. 1c

FIG.2a

EP 0 789 907 B1

Fig 2'b

EP 0 789 907 B1

FIG.2b

FIG.3a

FIG.3b

$\varepsilon A$

$\Delta f$

$f_{OKA}$

## FIG.4a

$\varepsilon$

$\varepsilon B$

$\Delta f$

$f_{OKB}$

niveau
de HF

## FIG.4b